# EUROPEAN PATENT SPECIFICATION

(11) **EP 3 577 181 B1**
(45) Date of publication and mention of the grant of the patent: **13.07.2022**
(21) Application number: 17703138.2
(22) Date of filing: 03.02.2017
(51) Int. Cl.: C09J 7/20

(54) **PRESSURE SENSITIVE ADHESIVE COMPOSITIONS AND METHODS FOR PREPARING SAME**
HAFTKLEBERZUSAMMENSETZUNGEN UND VERFAHREN ZUR HERSTELLUNG DAVON
COMPOSITIONS AUTOCOLLANTES ET PROCÉDÉS DE PRÉPARATION ASSOCIÉS

(43) Date of publication of application: 11.12.2019
(73) Proprietor: SYNTHOMER USA LLC, Dover, DE 19904 (US); Synthomer (UK) Ltd., Harlow, Essex CM20 2BH (GB)
(72) Inventor: LEE, Jay, Spartanburg, SC 29307 (US); GUO, Jong. S., Charlotte, NC 28277 (US)
(74) Representative: f & e patent
(86) International application number: PCT/EP2017/052367
(87) International publication number: WO 2018/141399

(56) References cited:
- EP-A1- 2 336 254
- WO-A1-2014/187692
- US-A1- 2012 261 070
- US-A1- 2012 263 950
- US-A1- 2013 202 886

## Description

### Field of the invention

The present invention relates to easy to produce pressure sensitive adhesives (PSAs) having improved high temperature shear resistance, coupled with good ambient peel adhesion strength.

### Background

Traditionally the adhesive tape industry has employed solvent-based acrylic technology in the production of high performance products for use in automotive and construction applications that can be subjected to high operating temperatures, and which demonstrate high holding power at both room temperature, as well as at elevated temperatures.

Therefore, the adhesive bond to the substrate should demonstrate a high adhesion character at low temperature, such as a high peel resistance, coupled with a high shear adhesion failure temperature (SAFT) value which is often associated with a high cohesive strength (also known as internal strength) within the adhesive layer, demonstrating good shear/creep resistance at high temperatures.

However, the use of solvents is regarded as costly and not environmentally friendly, requiring expensive capture and/or burning equipment associated with the coating lines. There is therefore, a real demand for a sustainable, water-based alternative which can deliver the peel and adhesion benefits of the solvent-based systems, without the hazards associated with their production.

The results described herein is the result of extensive polymerisation work in our R&D group, and it demonstrates that in comparison with US2012/0261070A1 for example, the judicious use of a suitably formulated terpolymer in which the monomers are present in an intimate mixture within a single emulsion particle can indeed achieve these results using a single monomer mixture added during the polymerisation for simplicity of production. In addition, we discovered that when thus added, both the ureido- functional monomers were effective at low levels. Furthermore, unlike US5908908 and WO2014/187692A1, we did not have to employ a mercaptan-based chain transfer agent to achieve a satisfactory adhesive bond, thus obviating the presence of unpleasant, odorous materials in the emulsion and in the resultant adhesive film. Furthermore, it was found that the resultant emulsion could be formulated as a water-based 1-pack system to generate a high SAFT adhesive layer, possessing enhanced peel adhesion properties.

WO 2014/187692, US 2012/0261070, US 2012/0263950 and US 2002/0083219 disclose the preparation of emulsion polymers employing monomer mixtures comprising ureido- and hydroxyl-functional monomers that can be suitably used in PSA applications. But the desired adhesive properties can only be achieved if complicated multistage polymerization processes are employed that result in emulsion polymer particles having distinct domains like core shell particles or particles having interpenetrating networks, wherein these domains have different physical properties such as different glass transition temperatures and/or different monomer compositions.

It is an object of the present invention to provide a pressure sensitive adhesive composition comprising an emulsion polymerization product that exhibits improved adhesive properties particularly an improved balance of peel strength and high shear adhesion failure temperature.

### SUMMARY OF THE INVENTION

This object has been attained by a pressure sensitive adhesive composition comprising the emulsion polymerization product of a monomer mixture, the monomer mixture comprising:
(a) more than 38 wt.-% of at least one alkyl ester of (meth)acrylic acid;
(b) more than 10 wt.-% to less than 20 wt:-% of at least one vinyl aromatic monomer;
(c) 0.1 to 8 wt.-% of at least one hydroxyl functional (meth)acrylate monomer;
(d) 0.05 to 3 wt.-% of least one ureido substituted ethylenically unsaturated monomer;
(e) 0 to 6 wt.-% at least one ethylenically unsaturated carboxylic acid;
(f) 0 to 25 wt.-% at least one ethylenically unsaturated monomer different from monomers (a) to (e),
wherein the amounts of monomers (a) to (f) add up to 100 wt-% based on the total weight of the monomer mixture.

### DETAILED DESCRIPTION OF THE INVENTION

Surprisingly, it has been discovered that the combination of a vinyl aromatic monomer(s) in amounts of more than 10 wt.-% to less than 20 wt.-% based on the total weight of the monomer mixture together with hydroxyl functional (meth)acrylic monomer(s), ureido-substituted ethylenically unsaturated monomer(s) and alkyl (meth)acrylate monomers, optionally in the presence of optionally one or more ethylenically unsaturated carboxylic acids and one of more vinyl esters of C₂- C₁₀ carboxylic acids produces emulsion PSAs with superior peel adhesion whilst maintaining a high temperature SAFT performance.

This improved properties can even be achieved by employing a less complicated polymerization process i.e. a one stage polymerization process wherein the polymerization product is made from a single homogeneous monomer charge. Also no mercaptans need to be added as was suggested by the prior art.

Furthermore, it has been found that the incorporation of the hydrophobic vinyl aromatic monomer and optionally the incorporation of a monomer comprising a hydrophobic vinyl ester of highly branched carboxylic acids, such as versatic acid, gave enhanced adhesion performance on non-polar substrates, in addition to the desired high SAFT performance. In addition, we believe that the incorporation of these monomers in to the emulsion formulation will further enhance the water resistance properties of the adhesive layer.

In general, the preferred alkyl esters of (meth)acrylic acids component (a) may be selected from C1-C18 alkyl (meth)acrylate, preferably C1-C18 alkyl acrylates and cyclic hydrocarbon acrylates such as norbornyl acrylate. Examples of such acrylate and methacrylate monomers include methyl acrylate, ethyl acrylate, n-propyl acrylate, iso-propyl acrylate, n-butyl acrylate, secondary butyl acrylate, hexyl acrylate, tert-butyl acrylate, 2-ethyl-hexyl acrylate, isooctyl acrylate, 4-methyl-2-pentyl acrylate, decyl acrylate, dodecyl acrylate, n-lauryl acrylate, octadecyl acrylate, 2-methylbutyl acrylate, stearyl acrylate. Suitable alkyl methacrylates include n-propyl methacrylate, n-butyl methacrylate, tert-butyl acrylate, hexyl methacrylate, octyl methacrylate and octadecyl methacrylate, decyl methacrylate, dodecyl methacrylate, 2-phenylethyl methacrylate, 1-(diethylamino)ethyl methacrylate), 1-(dimethylamino)ethyl methacrylate), C1-C18 methacrylates, methyl methacrylate, ethyl methacrylate, 4-tert-butylcyclohexyl methacrylate, benzyl methacrylate, cyclohexyl methacrylate, isobornyl methacrylate, isobutyl methacrylate, isopropyl methacrylate, phenyl methacrylate, tert-butyl methacrylate, lauryl methacrylate, stearyl methacrylate. Methyl acrylate, ethyl acrylate, propyl (meth)acrylate, butyl (meth)acrylate, 2-ethylhexyl (meth)acrylate, methyl methacrylate, ethyl methacrylate, isobutyl (meth)acrylate, tert-butyl (meth)acrylate and combinations thereof are preferred. Preferred combinations of the alkyl (meth) acrylates may comprise a mixture of one or more acrylic acid ester or (meth)acrylate acid ester(s) which when polymerised as homopolymers have a glass transition temperature of 50°C or less, and one or more acrylic acid ester or (meth)acrylate acid ester(s) which when polymerised as homopolymers have a glass transition temperature of greater than 50°C. The glass transition temperature is measured by DSC according to D3418-03 with a heating rate of 10°C/min, whereby the midpoint is recorded as glass transition temperature.

Typically, the alkyl (meth)acrylate monomers of Component (a) can be present in an amount of more than 41 wt.-%, at least 45 wt.-%, at least 50 wt.-%, at least 55 wt.-%, at least 60 wt.-%, at least 65 wt.-%, at least 70 wt.-%, at least 75 wt.-%, at least 80 wt.-% at least 85 wt.-%, no more than 89.85wt.-%, no more than 85 wt.-%, no more than 80 wt.-%, no more than 75 wt.-%, no more than 70 wt.-%, no more than 65 wt.-%, no more than 60 wt.-%, no more than 55 wt.-%, no more than 50 wt.-%, or no more than 45 wt.-%, based on the total weight of the monomer mixture.

Examples of vinyl-aromatic monomers, Component (b) suitable for use in the present invention include, for example, styrene, α-methylstyrene, vinyltoluene, o-methylstyrene, p- methylstyrene, p-tert-butylstyrene, 2,4-10 dimethylstyrene, 2-methylstyrene , 3-methylstyrene, 4-methylstyrene, 2-ethylstyrene , 3-ethylstyrene, 4-ethylstyrene, 2,4-diisopropylstyrene, 2,4-dimethylstyrene, 4-t-butylstyrene, 5-t-butyl-2-methylstyrene, 2- chlorostyrene, 3-chlorostyrene, 4 -chlorostyrene, 4-bromostyrene, 2-methyl-4,6-dichlorostyrene, 2,4-dibromostyrene, vinylnaphthalene, vinyltoluene and vinylxylene, 2-vinylpyridine, 4-vinylpyridine and 1,1-diphenylethylenes and substituted 1,1-diphenylethylenes , 1,2-diphenylethene and substituted 1,2-diphenylethylenes. Mixtures of one or more of the vinyl-aromatic compounds may also be used. The preferred monomers are styrene and α-methylstyrene. The vinyl-aromatic compounds is used in a range of more than 10 to less than 20 wt.-%, optionally from 10.5 to 19 wt.-%, optionally from 11 to 18 wt.-% and optionally from 11 to 17 wt.-%, based on the total weight of the monomer mixture.

Thus, the vinyl-aromatic monomer, Component (b), can be present in an amount of in an amount of more than 10.0% wt.-%, at least 11.0% wt.-%, at least 12.0 wt.-%, at least 13.0% wt.-%, at least 14.0 wt.-%, at least 15.0% wt.-%, at least 16.0 wt.-%, at least 17.0 wt.-%, at least 18.0 wt.-%, at least 19.0 wt.-%, less than 20 wt.-%, no more than 19wt.-%, no more than 18wt.-%, no more than 17wt.-%, no more than 16wt.-%, no more than 15wt.-%, no more than 14 wt.-%, no more than 13wt.-%, no more than12 wt.-%, no more than 11wt.-%, or no more than 10 wt.-%, based on the total weight of the monomer mixture.

The hydroxyl functional (meth)acrylic monomer component (c) may be selected from C₁-C₁₇ hydroxy alkyl (meth)acrylates, esters prepared from (meth)acrylic acid and a glycidyl ester of a C₂-C₁₂ carboxylic acid, and combinations thereof. Wherein the alkyl group may be linear or branched, and the hydroxyl group may or may not be on the branch of said branched alky group. Typical examples include hydroxyethyl acrylate, hydroxyethyl methacrylate, hydroxypropyl acrylate, hydroxypropyl methacrylate, hydroxybutylacrylate, hydroxybutyl methacrylate, hydroxyhexyl acrylate, hydroxylhexyl methacrylate, hydroxyethylhexyl acrylate, hydroxyethylhexyl methacrylate, ACETM hydroxyl acrylate monomers commercially available from Hexion Inc and any combination or subset thereof.

Typically, the hydroxyl functional (meth)acrylic monomer of component (c) can be present in an amount of at least 0.1 wt.-%, at least 0.25 wt.-%, at least 0.5 wt.-%, at least 0.75 wt.-%, at least 1.0 wt.-%, at least 1.5 wt.-%, at least 2.0 wt.-%, at least 2.5 wt.-%, at least 3.0 wt.-%, at least 3.5 wt.-%, at least 4.0 wt.-%, at least 4.5 wt.-%, at least 5.0 wt.-%, at least 5.5 wt.-%, at least 6.0 wt.-%, at least 6.5 wt.-%, at least 7.0 wt.-%, at least 7.5 wt.-%, no more than 8.0 wt.-%, no more than 7.5 wt.-%, no more than 7.0 wt.-%, no more than 6.5 wt.-%, no more than 6.0 wt.-%, no more than 5.5 wt.-%, no more than 4.0 wt.-%, no more than 3.5 wt.-%, no more than 3.0 wt.-%, no more than 2.5 wt.-%, no more than 2.0 wt.-%, no more than 1.5 wt.-%, no more than 1.0 wt.-%, no more than 0.75 wt.-%, no more than 0.5 wt.-%, no more than 0.25 wt.-%, no more than 0.1 wt.-%, or no more than 0.05 wt.-%, based on the total weight of the monomer mixture.

Examples of ureido substituted ethylenically unsaturated monomers are ureido substituted (meth)acrylate monomers, Component (d), and include C₇-C₁₇, preferably C₈-C₁₇ ureido alkyl acrylates or alky methacrylates. Typical examples include: 2-(2-oxoimidazolidin-1-yl)ethyl 2-methylprop-2-enoate; 2-(1-methyl-2-oxoimidazolidin-1-ium-1-yl)ethyl 2-methylprop-2-enoate; dimethyl-[2-(2-methylprop-2-enoyloxy)ethyl]-[2-(2-oxoimidazolidin-1-yl)ethyl]azanium; dimethyl-[2-(2-methylprop-2-enoyloxy)ethyl]-[2-(2-oxoimidazolidin-1-yl)ethyl]azanium chloride; dimethyl-[2-(2-methylprop-2-enoyloxy)ethyl]-[1-(2-oxoimidazolidin-1-yl)ethyl]azanium; dimethyl-[2-(2-methylprop-2-enoyloxy)ethyl]-[1-(2-oxoimidazolidin-1-yl)ethyl]azanium chloride; 2-(4-methyl-2-oxoimidazolidin-1-yl)ethyl 2-methylprop-2-enoate; 1-(2-oxoimidazolidin-1-yl)ethyl 2-methylprop-2-enoate; 2-(2-oxoimidazolidin-1-yl)ethyl 2-methylidenebutanoate; [1-acetamido-2-(2-oxoimidazolidin-1-yl)ethyl] 2-methylprop-2-enoate; [2-oxo-2-[2-(2-oxoimidazolidin-1-yl)ethylamino]ethyl] 2-methylprop-2-enoate; 2-(3-methyl-2-oxoimidazolidin-1-yl)ethyl 2-methylprop-2-enoate; [2-oxo-2-[2-(2-oxoimidazolidin-1-yl)ethoxy]ethyl] 2-methylprop-2-enoate; [2-oxo-2-[1-(2-oxoimidazolidin-1-yl) ethylamino]ethyl] 2-methylprop-2-enoate; and the like, including any combination or subset thereof. Alternatively, or additionally ureido substituted allyl monomers may be used, examples include 2-Imidazolidinone, 1-(2-aminoethyl)-, N,N-bis[2-hydroxy-3-(2-propenyloxy)propyl] and N-[2-hydroxy-3-(2-propenyloxy)propyl] derivatives) also known as SIPOMER^{®} WAM (allyl ether of a substituted urea), supplied by Solvay S.A.

Alternatively, the ureido substituted ethylenically unsaturated monomer may contain one or more of oxygen and/or nitrogen and/or silicon atoms in the spacer unit, which separates the ureido function from the ethylenic function.

Typically, the ureido substituted (meth)acrylate monomer and/or ureido substituted allyl monomer of component (d) can be present in an amount of at least 0.05% wt.-%, at least 0.1 wt.-%, at least 0.2 wt.-%, at least 0.35 wt.-%, at least 0.5 wt.-%, at least 0.75 wt.-%, at least 1.0 wt.-%, at least 1.5 wt.-%, at least 2.0 wt.-%, at least 2.5 wt.-%, no more than 3.0 wt.-%, no more than 2.5 wt.-%, no more than 2.0 wt.-%, no more than 1.5 wt.-%, no more than 1.0 wt.-%, no more than 0.75 wt.-%, no more than 0.5 wt.-%, no more than 0.35 wt.-%, no more than 0.2 wt.-%, no more than 0.1 wt.-%, or no more than 0.05 wt.-%, based on the total weight of the monomer mixture.

When utilized, examples of the optional ethylenically unsaturated carboxylic acid(s), component (e), include monoethylenically unsaturated monocarboxylic acids such as acrylic acid, methacrylic acid, ethacrylic acid, crotonic acid, and β-carboxyethyl acrylate, monoethylenically unsaturated dicarboxylic acids such as maleic acid, fumaric acid, itaconic acid, and citraconic acid, monoethylenically unsaturated tricarboxylic acids such as aconitic acid, and the halogen substituted derivatives (e.g., alpha-chloracylic acid) and anhydrides of these acids (e.g., maleic anhydride and citraconic anhydride) and salts thereof. Examples of other suitable ethylenically unsaturated acids include vinyl acetic acid, vinyl lactic acid, vinyl sulfonic acid, 2-methyl-2-propene-1-sulfonic acid , styrene sulfonic acid, acrylamidomethyl propane sulfonic acid and the salts thereof. (Meth)acrylic acid, crotonic acid, itaconic acid, β-carboxyethyl acrylate, maleic acid, fumaric acid and combinations thereof are particularly preferred. Alternatively, the monomer mixture is free of ethylenically unsaturated carboxylic acids.

When utilized, monoethylenically unsaturated carboxylic acids, Component (e), can be present in an amount of at least 0.05% wt.-%, at least 0.1 wt.-%, at least 0.5 wt.-%, at least 1.0 wt.-%, at least 2.0 wt.-%, at least 3.0 wt.-%, at least 4.0 wt.-%, no more than 6.0 wt.-%, no more than 4.0 wt.-% no more than 2.0 wt.-%, no more than 1.0 wt.-%, based on the total weight of the monomer mixture.

When utilized, examples of monomers different from monomers (a) to (e) component (f) are vinyl esters of C₁ - C₂₀ carboxylic acid monomers, also known as vinyl ester monomers, and include vinyl acetate, vinyl benzoate, vinyl butyrate vinyl formate, vinyl propionate, vinyl stearate, vinyl-2-ethylhexanoate, vinyl ester of C9 branched hydrocarbon acids (supplied under the tradename of Veova^{™} 9 by Momentive Speciality Chemicals Inc.), vinyl ester of C10 branched hydrocarbon acids (also known as the vinyl ester of versatic acid, vinyl versatate, and supplied under the tradename of Veova^{™} 10 by Momentive Speciality Chemicals Inc.). Particularly suitable vinyl ester monomers for use in the present invention are vinyl esters of C₄ - C₂₀ carboxylic acids. The most preferred vinyl ester monomer for use in the present invention is the vinyl ester of versatic acid, also known as VeoVa^{™} 10.

Typically, the vinyl ester monomers can be present in an amount of at least 0.05% wt.-%, at least 0.1 wt.-%, at least 0.5 wt.-%, at least 1.0 wt.-%, at least 2.0 wt.-%, at least 4.0 wt.-%, at least 6.0 wt.-%, at least 8.0 wt.-%, at least 10.0 wt.-%, at least 12.0 wt.-%, at least 14.0 wt.-%, at least 16.0 wt.-%, at least 18.0 wt.-%, at least 20.0 wt.-%, at least 22.0 wt.-%, at least 24.0 wt.-%, no more than 25 wt.-%, no more than 24 wt.-%, no more than 22 wt.-%, no more than 20 wt.-%, no more than 18 wt.-%, no more than 16 wt.-%, no more than 14 wt.-%, no more than 12 wt.-%, no more than 10 wt.-%, no more than 8 wt.-%, no more than 6 wt.-%, no more than 4 wt.-%, no more than 2 wt.-%, or no more than 1 wt.-% or no more than 0.05 wt.-% based on the total weight of the monomer mixture.

Alternatively, the monomer mixture is free of vinyl esters of C₁ - C₂₀ carboxylic acid monomers.

Examples of further monomers of component (f) include nitriles of the above ethylenically unsaturated carboxylic acids such as acrylonitrile, alpha chloroacrylonitrile, and methacrylonitrile. Examples include amides of these carboxylic acids such as unsubstituted amides (e.g., (meth)acrylamide) and other alpha substituted acrylamides and n-substituted amides obtained by the reaction of the amides of the aforementioned carboxylic acids with an aldehyde (e.g., formaldehyde). Typical N-substituted amides include N-methylolacrylamide, N-methylolmethacrylamide alkylated nmethylolacrylamides, and N-methylolmethacrylamides (e.g., N-methyoxymethylacrylamide and N-methoxymethylmethacrylamide).

Additionally, examples monomers of component (f) are hydrocarbon monomers including ethylene, propylene, butylene, and conjugated dienes (for example, but not exclusively, butadiene, isoprene and copolymers of butadiene and isoprene) and any combination or subset thereof.

When utilized, the monomer mixture for the PSA composition of the invention may comprise 0.1 to 10 wt.-%, or 0.5 to 5 wt.-%, or 1 to 3 wt.-% of the optional hydrocarbon monomers, based on the total weight of the monomer mixture When present, the monomer mixture for the PSA composition of the invention may comprise about 0.05 to about 25 wt.-% nitriles and/or amides of monoethylenically unsaturated carboxylic acids, they can be present in an amount of at least 0.05% wt.-%, at least 0.1 wt.-%, at least 0.5 wt.-%, at least 1.0 wt.-%, at least 2.0 wt.-%, at least 4.0 wt.-%, at least 6.0 wt.-%, at least 8.0 wt.-%, at least 10.0 wt.-%, at least 12.0 wt.-%, at least 14.0 wt.-%, at least 16.0 wt.-%, at least 18.0 wt.-%, at least 20.0 wt.-%, at least 22.0 wt.-%, at least 24.0 wt.-%, no more than 25 wt.-%, no more than 24 wt.-%, no more than 22 wt.-%, no more than 20 wt.-%, no more than 18 wt.-%, no more than 16 wt.-%, no more than 14 wt.-%, no more than 12 wt.-%, no more than 10 wt.-%, no more than 8 wt.-%, no more than 6 wt.-%, no more than 4 wt.-%, no more than 2 wt.-%, or no more than 1 wt.-% or no more than 0.05 wt.-% based on the total weight of the monomer mixture. based on the total weight of the monomer mixture.

Additional examples of monomers according to component (f) are ethylenically unsaturated surfactants which are known to the person skilled in the art as reactive surfactants and will be disclosed below with respect to preferred embodiments and amounts when describing the surfactants that can be used in the emulsion polymerization of the present invention.

According to the present invention it is preferred to employ as monomer component (f) vinyl esters of C₄ - C₂₀ carboxylic acids, ethylenically unsaturated surfactants or combinations thereof.

The emulsion polymerization product to be used in the pressure sensitive adhesion composition according to the present invention is preferably a one-stage emulsion polymerization product. By one-stage emulsion polymerization product it is meant that the polymerization is conducted in one stage using a single homogenous monomer charge for making the polymerization product. Thereby an emulsion polymerization process using an external or internal seed having the same monomer composition as the monomer charge used for making the emulsion polymerization product for adjusting the particle size is not excluded. As a consequence the one-stage emulsion polymerization product does not contain distinguishable domains within a polymer particle.

The process to prepare the dispersions of the invention utilizes a continuous phase (usually water), and may include other components standard and known in the art such as initiators, reducing agents, surfactants, defoamers wetting agents, crosslinking agents, preservatives and the like.

The polymer latex according to the present invention may be made by any emulsion polymerization process known by a person skilled in the art provided the monomer mixture as herein defined is employed. If a one-stage emulsion polymerization process is employed the monomers may optionally be premixed, and polymerised using either a batch, a semi-continuous or a pseudobatch charging regime, optionally in the presence of an internal seed latex comprised of the same monomer composition as the monomer mixture added in the polymerization; also known in the state of the art as *ab initio* polymerisation.

The process for the preparation of the above-described polymer latex can be performed at temperatures of from 0 to 130° C, preferably of from 40 to 100° C, particularly preferably of from 45 to 95° C, very particularly preferably of from 55 to 90° C, in the presence of no or one or more emulsifiers and one or more initiators. The temperature includes all values and sub-values therebetween, especially including 5, 10, 15, 20, 25, 30, 35, 40, 45, 50, 55, 60, 65, 70, 75, 80, 85, 90, 95, 100, 105, 110, 115, 120 and 125°C.

Initiators which can be used when carrying out the present invention include water soluble and/or oil-soluble initiators which are effective for the purposes of the polymerization. Representative initiators are well known in the technical area and include, for example: azo compounds (such as, for example, AIBN, AMBN and cyanovaleric acid) and inorganic peroxy compounds, such as hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tertiary butyl perbenzoate and combinations of inorganic and organic initiators.

The initiator is used in a sufficient amount to initiate the polymerization reaction at a desired rate. In general, an amount of initiator of from 0.01 to 3, preferably of from 0.1 to 3 %, by weight, based on the weight of the total polymer, is sufficient. The amount of initiator is most preferably of from 0.01 to 1% by weight, based on the total weight of the polymer. The amount of initiator includes all values and subvalues therebetween, especially including 0.01, 0.1, 0.5, 1, 1.5, 2, 2.5 and 3% by weight, based on the total weight of the polymer.

The above mentioned inorganic and organic peroxy compounds may also be used alone in combination with one or more suitable reducing agents as is well known in the art. Examples of such reducing agents which may be mentioned are sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, chelated iron salts, glucose, sulfonic acid compounds such as sodium methane sulfonate, amine compounds such as dimethylaniline and ascorbic acid. The quantity of the reducing agent is preferably 0.03 to 10 parts by weight per part by weight of the polymerization initiator.

In one embodiment, the water soluble polymerization initiator systems are peroxides utilized in combination with conventional reducing agents such as tert-butyl hydroperoxide + sodium formaldehyde sulfoxylate based systems, optionally with a chelated ferric complex catalyst.

Surfactants or emulsifiers which are suitable for stabilizing the latex particles include those conventional surface-active agents for polymerization processes. The surfactant or surfactants can be added to the aqueous phase and/or the monomer phase. An effective amount of surfactant is the amount which was chosen for influencing the particle size.

Examples of suitable surfactant systems are those known in the art and include anionic, nonionic, cationic, or amphoteric emulsifiers and mixtures thereof. Examples of anionic surfactants include, but are not limited to, alkyl sulfates, sulfates of ethoxylate alcohols, aryl sulfonates, phosphates of ethoxylated alcohols, sulfosuccinates, sulfates and sulfonates of ethoxylated alkylphenols, and mixtures thereof.

Examples of nonionic surfactants include, but are not limited to, ethoxylated alcohols, ethoxylated alkylphenols, and mixtures thereof. Preferred are the group of non-ionic surfactants which are known in the art to be environmentally benign and (alkyl phenyl ethoxylate)-free, especially (nonylphenol ethoxylate)-free, examples of these class of surfactants include linear and/or branched alkyl ethoxylates. An example is the proprietry surfactant, Abex^{®} 2535 supplied by Solvay S.A.

Examples of cationic surfactants include, but are not limited to, ethoxylated fatty amines and salts thereof.

In one embodiment, reactive surfactant chemistry which has a polymerisable carbon-carbon double bond is utilized. Examples of reactive chemistries include, but are not limited to, alkylphenol ethoxylates containing alkenyl substituents, polyoxyalkylene-1-(allyloxymethyl) alkyl ether sulfate salt compounds, salts of poly(oxy-1,2-ethanediyl), alpha-sulfo-omega-[1-(hydroxymethyl)-2-(2-propenyloxy) ethoxy] (Adeka SR Series, commercially available from Adeka Corporation), and mixtures or subsets thereof. In one embodiment, the reactive surfactant includes an Adeka SR Series reactive surfactant.

Additional representative surfactants include saturated and ethylenically unsaturated sulfonic acids or salts thereof, including, for example, unsaturated hydrocarbonsulfonic acid, such as vinylsulfonic acid, allylsulfonic acid and methallylsulfonic acid, and salts thereof; aromatic hydrocarbon acids, such as, for example, p-styrenesulfonic acid, isopropenylbenzenesulfonic acid and vinyloxybenzenesulfonic acid and salts thereof; sulfoalkyl esters of acrylic acid and methacrylic acid, such as, for example, sulfoethyl methacrylate and sulfopropyl methacrylate and salts thereof, and 2-acrylamido-2-methylpropanesulfonic acid and salts thereof; alkylated diphenyl oxide disulfonates, sodium dodecylbenzenesulfonates and dihexyl esters of sodium sulfosuccinate,ethoxylated alkylphenols and ethoxylated alcohols, fatty alcohol (poly)ethersulfates and salts thereof.

The type and the amount of the surfactant is governed typically by the number of particles, their size and their composition. The typical weight of surfactant is 0.2 to 5.0 wt. % and more preferably 1.0 to 5.0 wt. % and most preferably 1.0 to 3.0 wt. %.

Typically, the surfactant is used in amounts of from 0 to 10, preferably from 0.1 to 5, more preferably from 0.5 to 3, most preferably from 1 to 3 parts by weight, based on the total weight of the monomers. The amount of surfactant includes all values and sub-values therebetween, especially including 0, 0.1, 0.5, 1, 1.5, 2, 2.5, 3, 3.5, 4, 4.5 and 5 parts by weight based on the total weight of the monomer. According to one embodiment of the present invention, the polymerization is conducted without using surfactants.

The surfactants are utilized by conventional methods that are well known in art. In one embodiment, the process to prepare the emulsion of this invention includes the emulsification of the monomer mix with optionally a part or all of the optionally present surfactant system prior to the polymerization reaction, in a process known as pre-emulsification.

Various protective colloids can also be used instead of or in addition to the surfactants described above. Suitable colloids include polyhydroxy compounds, such as partially acetylated polyvinyl alcohol, casein, hydroxyethyl starch, carboxymethylcellulose, hydroxyethylcellulose, hydroxypropylcellulose, dextrins, polyethylene glycol and gum arabic. The preferred protective colloids are carboxymethylcellulose, hydroxyethylcellulose and hydroxypropylcellulose. In general, these protective colloids are used in contents of from 0 to 10, preferably from 0 to 5, more preferably from 0 to 2 parts by weight, based on the total weight of the monomers. The amount of protective colloids includes all values and sub-values therebetween, especially including 1, 2, 3, 4, 5, 6, 7, 8 and 9 parts by weight, based on the total weight of the monomers.

The person skilled in the art will appreciate the type and amounts of monomers bearing a polar functional group, surfactants and protective colloids that are to be selected to make the polymer latex according to the present invention suitable for use in pressure sensitive adhesive applications.

It is frequently advisable to perform the emulsion polymerization additionally in the presence of buffer substances and chelating agents. Suitable substances are, for example, alkali metal carbonates or hydrogen carbonates or ammonium salts thereof, or alkali metal phosphates and pyrophosphates or ammonium salts thereof (buffer substances) and the alkali metal salts of ethylenediaminetetraacetic acid (EDTA) or hydroxyl-2-ethylenediaminetriacetic acid (HEEDTA) as chelating agents. If used, the quantity of buffer substances and chelating agents is usually 0.001-1.0 weight percent, based on the total quantity of monomers.

Following polymerization, the pH of the latex emulsion may need to be adjusted with a suitable base including, but are not limited to, alkali metal hydroxides, ammonium hydroxide, amines, hydroxyalkyl amines and mixtures thereof. The pH is adjusted to at least 6.0, and more preferably 6.5 to 9.5, and most preferably 7.0 to 9.0. In one embodiment, the suitable base is ammonium hydroxide.

The PSA emulsion of the invention has a typical solids content from about 30 to 70% and preferably 40 to 55%. Polymerization can be conducted at typical temperatures for emulsion polymerization. The polymerization is preferably conducted in the range of 110°F (43.3°C) to 210°F (99°C) and more preferably 130°F (54°C) to 190°F (88°C).

Various other additives and ingredients can be added in order to prepare the PSA emulsion composition of the present invention. Such additives include, for example: antifoams, wetting agents, thickeners, plasticizers, fillers, pigments, dispersants, antioxidants and/or biocides.

The PSA compositions according to the present invention may comprise further additives to adjust the required properties of the PSA compositions. For example tackifiers and or polyolefin emulsions may be added to improve the adhesion properties on certain substrates such as stainless steel and high density polyethylene. Tackifiers and polyolefin emulsions may be added in amounts of 1 to 60 wt%, preferably 5 to 40 wt%, most preferred 10-25 wt% solids based on total solids of the PSA composition.

Suitable tackifiers may be selected from rosin acids, rosin esters, terpenes, or hydrocarbon-based tackifiers. Commercially available examples are Aquatac 6085 from Arizona Chemical, Snowtack FH95G from Lawter Inc, Tacolyn 1070 from Eastman Chemical Company, and Dermulsene TR501 from DRT.

Suitable polyolefin emulsions may be selected from polyethylene or polypropylene dispersions. The polyolefin may contain acid functionality. Commercially available examples are Cohesa 0001 from Honeywell, Michem Prime 499OR from Michelman, and Hypod 4501 from The Dow Chemical Company.

In order to provide a better understanding of the present invention including representative advantages thereof, the following examples are offered.

The following abbreviations are used In the following Tables:
- 2-EHA: : 2-Ethylhexyl acrylate
- BA: : n-Butyl acrylate
- MMA: : Methyl methacrylate
- ST: : Styrene
- AA:: Acryl ic acid
- HEA: : 2-Hydroxyethyl acrylate
- UM: : N-(2-Methacryloyloxyethyl) ethylene urea (same as 2-(2-oxoimidazolidin-1-yl)ethyl 2-methylprop-2-enoate)
- WAM: : Allyl ether of a substituted urea (same as 2-Imidazolidinone, 1-(2-aminoethyl)-, N,N-bis[2-hydroxy-3-(2-propenyloxy)propyl] and N-[2-hydroxy-3-(2-propenyloxy)propyl] derivatives))

### Examples

### Example 1 (Comparative)

A pre-emulsion was formed by mixing 231.3 g water, 25.4 g Dowfax 2A1 (from Dow), 4.6 g Abex 2535 (from Solvay), 380.4 g 2-EHA, 270.1 g BA, 59.0 g MMA, 22.8 g ST, 11.4 g AA, 15.2 g HEA and 1.9g UM. Two separate solutions were prepared: (A) 2.3 g sodium persulfate in 54.8 g water and (B) 1.5 g sodium persulfate in 13.7 g water. 349 g water and 1.0 g Dowfax 2A1 surfactant were charged to the reactor. Nitrogen purge was started and heating to 78°C took place. At 78°C, 31 g of the pre-emulsion was added to the reactor. Solution B was charged to the kettle and flushed with 3 g water. Nitrogen purge was turned off, and the reaction exotherm began. 15 minutes after the exotherm peaked, the mixture from pre-emulsion tank and solution A was allowed to flow into the reactor for 3.5 hours and the reactor temperature was controlled at 85°C. After the flow was complete, the pre-emulsion was flushed with 8 g water and the reactor held at 87°C for 45 minutes then cooled. Solution (C) 2.7 g t-butyl hydroperoxide in 20 g water and (D) 1.2 g sodium formaldehyde sulfoxylate in 16 g water were prepared. Flow of solutions C and D to the reactor over 45 minutes was started, and the reactor held for another 15 minutes. The reactor was cooled to room temperature and the pH was adjusted to 6.0-8.0 with 28% aqueous ammonia solution. 1% Aerosol OT-75 (from Cytec Solvay Group) based on the total weight was added and mixed for 1 hours.

### Example 2:

A pre-emulsion was formed by mixing 233.3 g water, 57.0 g ammonium polyarylphenyl ether sulfate surfactant (20% aqueous solution), 6.1 g Abex 2535 (from Solvay), 379.8 g 2-EHA, 216.5 g BA, 28.5 g MMA, 106.3 g St, 11.4 g AA, 15.2 g HEA and 1.9 g UM. Two separate solutions were prepared: (A) 2.3 g sodium persulfate in 54.8 g water and (B) 1.5 g sodium persulfate in 13.7 g water. 308.4 g water and 2.3 g ammonium polyarylphenyl ether sulfate surfactant (20% aqueous solution) were charged to the reactor. The nitrogen purge was started and heating to 78°C took place. At 78°C, 31 g of the pre-emulsion was added to the reactor. Solution B was charged to the kettle and flushed with 3 g water. The nitrogen purge was turned off, and the reaction exotherm commenced. 15 minutes after the exotherm peaked, the mixture from pre-emulsion tank and solution A was allowed to flow into the reactor over 3.5 hours and the reactor temperature was controlled at 85°C. After the flow was complete, the pre-emulsion line was flushed with 8 g water and the reactor held at 87°C for 45 minutes then cooled. Solution (C) 2.7 g t-butyl hydroperoxide in 20 g water and (D) 1.2 g sodium formaldehyde sulfoxylate in 16 g water were prepared. Flow of solution C and D to the reactor over 45 minutes was started, and the reactor held for another 15 minutes. The reactor was cooled to room temperature and the pH was adjusted to 6.0-8.0 with 28% aqueous ammonia solution. Finally, 1% aqueous solution of Aerosol OT-75 (from Cytec Solvay Group) based on the total weight of polymer was added and mixed for 1 hours.

### Examples 3 and 4

Example 3 and Comparative Example 4 were prepared using the same method as in Example 2 with different monomer compositions as set forth in Table 1.

**Table 1 Monomer charge**

| | Ex 1 (comp.) | Ex 2 | Ex 3 | Ex 4 (comp) |
|---|---|---|---|---|
| 2-EHA | 50 | 50 | 50 | 50 |
| BA | 35.5 | 2 8.5 | 25.5 | 17.5 |
| MMA | 7.75 | 3.75 | 3.75 | 3.75 |
| ST | 3 | 14 | 17 | 25 |
| AA | 1.5 | 1.5 | 1.5 | 1.5 |
| HEA | 2 | 2 | 2 | 2 |
| UM | 0.25 | 0.25 | 0.25 | 0.25 |

### Experimental methods for determining the peel adhesion values

The samples were tested by coating onto 2mm PET film (supplied by Chemlnstruments), air dried at room temperature for 30 minutes and then further dried at 110°C in an oven for 3 minutes with a target dried adhesive coat weight of 50 g/m². The coated PET was then laminated to a release liner (silicone-based release paper supplied by Chemlnstruments).

The PET/adhesive/liner construction was cut into 2.54 cm wide stripes, the release liner was removed, and the PET film with adhesive was laminated to stainless steel (SS) coupons for peel testing. The test method used was the Pressure Sensitive Tape Council (USA) method, PSTC-101, Method A, using either a 15-minute or a 24-hour dwell time. After adhering the construct to the SS test panel, it was rolled twice using a 2 kg weight roller. 180 degree peel tests were run after the specified dwell time had elapsed, using either an Instron Tester model 5564 or model 3369. The Peel adhesion values were calculated from the average of 3 repeat test runs.

The sample strips were also tested for SAFT (Shear Adhesion Failure Temperature) using the Pressure Sensitive Tape Council (USA) method, PSTC-17. The adhesive/PET/release liner construct was cut into 1-inch wide stripes with a length of 6 inches and the PET film was reinforced with aluminum foil tape on the backside to avoid tearing at high temperature. The aluminium tape (Al) was 324A^{™} UL 181A-P & B-FX Listed premium cold weather foil tape, supplied by Nashua^{®} Tape Products. The adhesive/PET/AI construct was adhered to a stainless steel panel with 1 inch by 1 inch contact area and then rolled twice using a 2kg weight roller. The steel panel coated with the strip was then placed in to a rack, in an oven held at 40°C, such that the panel formed an angle of 178° to 180° to the vertical. The oven used was an SO-8 Shear Test Oven supplied by Chemlnstruments, and comprised a forced-ventilation oven with a ramping controller. The conditioning time in the oven for the steel panel with the adhesive strip was 30 minutes. Then a 1-kg weight was hung on to the adhesive strip, the oven was programmed to hold at 40°C for 20 minutes immediately after the weight was attached. Following this 20 minutes hold, the oven temperature automatically increased at a programmed rate of 0.5°C per minute. When the oven temperature reached 200°C, the test was completed and the oven started to cool. When the 1-kg weight dropped due to the failure of the test strip on the steel coupon, the temperature was recorded as the SAFT value. If the test strip did not fail throughout the course of the temperature rise, the SAFT was recorded as 200+°C. The SAFT values were calculated from the average of 3 repeat test runs.

**Table 2: Adhesive properties**

| | Ex 1 (comp) | Ex 2 | Ex 3 | Ex 4 (comp) |
|---|---|---|---|---|
| PL15 (SS) (Ibs/inch) | 2.00 | 1.94 | 2.23 | 3.26 |
| PL24 (SS) (Ibs/inch) | 2.67 | 4.18 | 3.48 | 4.66 |
| SAFT (°C) | 200+ | 200+ | 200+ | 126 |

As is evident from Table 2 the examples according to the present invention a higher peel strength particularly PL24 compared to comp. Example 1 having a lower styrene content without compromising SAFT compared to comp. Example 4, thus providing an improved balance of peel strength and SAFT.

## Claims

1. A pressure sensitive adhesive composition comprising the emulsion polymerization product of a monomer mixture, the monomer mixture comprising:
(a) more than 38 wt.-% of at least one alkyl ester of (meth)acrylic acid;
(b) more than 10 wt.-% to less than 20 wt:-% of at least one vinyl aromatic monomer;
(c) 0.1 to 8 wt.-% of at least one hydroxyl functional (meth)acrylate monomer;
(d) 0.05 to 3 wt.-% of least one ureido substituted ethylenically unsaturated monomer;
(e) 0 to 6 wt.-% at least one ethylenically unsaturated carboxylic acid;
(f) 0 to 25 wt.-% at least one ethylenically unsaturated monomer different from monomers (a) to (e),
wherein the amounts of monomers (a) to (f) add up to 100 wt-% based on the total weight of the monomer mixture.

2. The pressure sensitive adhesive composition of claim 1, wherein:
(b) the vinyl aromatic monomer is selected from styrene, alpha methyl styrene, vinyl toluene and combinations thereof; and/or
(c) the hydroxyl functional (meth)acrylate monomer is selected from C₁-C₁₇ hydroxy alkyl (meth)acrylates, esters prepared from (meth)acrylic acid and a glycidyl ester of a C₂-C₁₂ carboxylic acid, and combinations thereof; and/or
(d) the ureido substituted ethylenically unsaturated monomer is selected from ureido substituted (meth)acrylate monomers and ureido substituted allyl monomers and combinations thereof; and/or
(f) the at least one ethylenically unsaturated monomer different from monomers (a) to (e) comprise vinyl esters of C₄ - C₂₀ carboxylic acids, ethylenically unsaturated surfactants and combinations thereof.

3. The pressure sensitive adhesive composition of claim 2, wherein:
(c) the hydroxyl functional (meth)acrylate monomer is selected from the group consisting of hydroxyethyl acrylate, hydroxyethyl methacrylate, hydroxypropyl acrylate, hydroxypropyl methacrylate, hydroxybutylacrylate, hydroxybutyl(meth)acrylate, hydroxyhexyl acrylate, hydroxylhexyl methacrylate, hydroxyethylhexyl acrylate, hydroxyethylhexyl methacrylate and combinations thereof.

4. The pressure sensitive adhesive composition of any of the preceding claims, wherein:
(c) the at least one hydroxyl functional (meth)acrylate monomer is present in an amount of 0.1 to 5 wt.-%, preferably 0.1 to 4.0 wt.-% based on the total weight of the monomer mixture.

5. The pressure sensitive adhesive composition of claim 2, wherein the ureido substituted (meth)acrylate monomer is selected from the group consisting of 2-(2-oxoimidazolidin-1-yl)ethyl 2-methylprop-2-enoate; 2-(1-methyl-2-oxoimidazolidin-1-ium-1-yl)ethyl 2-methylprop-2-enoate; dimethyl-[2-(2-methylprop-2-enoyloxy)ethyl]-[2-(2-oxoimidazolidin-1-yl)ethyl]azanium; dimethyl-[2-(2-methylprop-2-enoyloxy)ethyl]-[2-(2-oxoimidazolidin-1-yl)ethyl]azanium chloride; dimethyl-[2-(2-methylprop-2-enoyloxy)ethyl]-[1-(2-oxoimidazolidin-1-yl)ethyl]azanium; dimethyl-[2-(2-methylprop-2-enoyloxy)ethyl]-[1-(2-oxoimidazolidin-1-yl)ethyl]azanium chloride; 2-(4-methyl-2-oxoimidazolidin-1-yl)ethyl 2-methylprop-2-enoate; 1-(2-oxoimidazolidin-1-yl)ethyl 2-methylprop-2-enoate; 2-(2-oxoimidazolidin-1-yl)ethyl 2-methylidenebutanoate; [1-acetamido-2-(2-oxoimidazolidin-1-yl)ethyl] 2-methylprop-2-enoate; [2-oxo-2-[2-(2-oxoimidazolidin-1-yl)ethylamino]ethyl]2-methylprop-2-enoate; 2-(3-methyl-2-oxoimidazolidin-1-yl)ethyl 2-methylprop-2-enoate; [2-oxo-2-[2-(2-oxoimidazolidin-1-yl)ethoxy]ethyl] 2-methylprop-2-enoate; [2-oxo-2-[1-(2-oxoimidazolidin-1-yl)ethylamino]ethyl]2-methylprop-2-enoate, 2-Imidazolidinone, 1-(2-aminoethyl)-, N,N-bis[2-hydroxy-3-(2-propenyloxy)propyl] and N-[2-hydroxy-3-(2-propenyloxy)propyl] derivatives)and combinations thereof.

6. The pressure sensitive adhesive composition of claim 2, wherein the vinyl esters of C₂ - C₂₀ carboxylic acids are selected from vinyl acetate, vinyl benzoate, vinyl butyrate vinyl formate, vinyl propionate, vinyl stearate, vinyl-2-ethylhexanoate, vinyl ester of C9 branched hydrocarbon acids, vinyl ester of C10 branched hydrocarbon acids.

7. The pressure sensitive adhesive composition of any of the preceding claims wherein (b) the at least one vinyl aromatic monomer is present in an amount of 10.5 to 19 wt.-%, preferably 11 to 18 wt.-%, more preferred 11 to 17 wt.-% based on the total weight of the monomer mixture.

8. The pressure sensitive adhesive composition of any of the preceding claims wherein (e) the at least one ethylenically unsaturated carboxylic acid is present in an amount of 0.05 to 4 wt.-% based on the total weight of the monomer mixture, and is a monoethylenically unsaturated monocarboxylic acid or and anhydride thereof or wherein (e) no ethylenically unsaturated carboxylic acid is present in the monomer mixture.

9. The pressure sensitive adhesive composition of any of the preceding claims wherein the least one ureido substituted ethylenically unsaturated monomer (d) is present in an amount of 0.05 to 1 wt.-% based on the total weight of the monomer mixture.

10. The pressure sensitive adhesive composition of any preceding claim, wherein over 90 wt.-%, preferably over 95 wt.-% of the at least one alkyl ester of (meth)acrylic acid (a) is comprised of alkyl esters of (meth)acrylic acid monomer's whose homopolymers have a Glass Transition Temperature below 50°C measured by DSC according to D3418-03 with a heating rate of 10°C/min, whereby the midpoint is recorded as Glass Transition Temperature.

11. The pressure sensitive adhesive composition of any of the preceding claims further comprising tackifiers or polyolefin emulsions or combinations thereof.

12. The pressure sensitive adhesive composition of any of the preceding claims wherein the composition does not contain components having oxirane functionality.

13. The pressure sensitive adhesive composition of any of the preceding claims, wherein the emulsion polymerization product is a one-stage emulsion polymerization product.

14. The pressure sensitive adhesive composition of any of the preceding claims, wherein in the preparation of the one-stage emulsion polymerization product the monomers are optionally premixed and pre-emulsified, and polymerised using either a batch, a semi-continuous or a pseudobatch charging regime, optionally in the presence of an internal seed latex comprised of the same monomer composition as the monomer mixture added in the polymerization.

15. The use of a pressure sensitive adhesive composition as defined in any one of claims 1-14 for use freely applied to articles or as an adhesive tape for use in automotives, marine vessels, electronic components, furnaces, pyrolysis units, exhaust gas equipment, space equipment or geothermal apparatus.

## Patentansprüche

1. Eine Haftklebstoffzusammensetzung, enthaltend das Emulsionspolymerisationsprodukt einer Monomermischung, wobei die Monomermischung
(a) mehr als 38 Gew.-% von zumindest einem Alkylester von (Meth)Acrylsäure,
(b) mehr als 10 Gew.-% bis weniger als 20 Gew.-% von zumindest einem vinylaromatischen Monomer,
(c) 0,1 bis 8 Gew.-% von zumindest einem hydroxylfunktionellen (Meth)Acrylatmonomer,
(d) 0,05 bis 3 Gew.-% von zumindest einem Ureido-substituierten ethylenisch ungesättigten Monomer,
(e) 0 bis 6 Gew.-% von zumindest einer ethylenisch ungesättigten Carbonsäure,
(f) 0 bis 25 Gew.-% von zumindest einem ethylenisch ungesättigten Monomer, das von den Monomeren (a) bis (e) verschiedenen ist,
enthält,
wobei sich die Mengen der Monomere (a) bis (f) zu 100 Gew.-%, bezogen auf das Gesamtgewicht der Monomermischung, addieren.

2. Die Haftklebstoffzusammensetzung gemäß Anspruch 1, wobei:
(b) das vinylaromatische Monomer aus Styrol, alpha-Methylstyrol, Vinyltoluol und Kombinationen davon ausgewählt ist, und/oder
(c) das hydroxylfunktionelle (Meth)Acrylatmonomer aus C₁-C₁₇ Hydroxyalkyl(meth)acrylaten, Estern hergestellt aus (Meth)Acrylsäure und einem Glycidylester einer C₂-C₁₂ Carbonsäure und Kombinationen davon ausgewählt ist, und/oder
(d) das Ureido-substituierte ethylenisch ungesättigte Monomer aus Ureido-substituierten (Meth)Acrylatmonomeren und Ureido-substituierten Allylmonomeren und Kombinationen davon ausgewählt ist, und/oder (f) das zumindest eine ethylenisch ungesättigte Monomer, das von den Monomeren (a) bis (e) verschieden ist, Vinylester von C₄ - C₂₀ Carbonsäuren, ethylenisch ungesättigte Tenside und Kombinationen davon umfasst.

3. Die Haftklebstoffzusammensetzung nach Anspruch 2, wobei: (c) das hydroxylfunktionelle (Meth)Acrylatmonomer aus der Gruppe bestehend aus Hydroxyethylacrylat, Hydroxyethylmethacrylat, Hydroxypropylacrylat, Hydroxypropylmethacrylat, Hydroxybutylacrylat, Hydroxybutyl(meth)acrylat, Hydroxyhexylacrylat, Hydroxylhexylmethacrylat, Hydroxyethylhexylacrylat, Hydroxyethylhexylmethacrylat und Kombinationen davon ausgewählt ist.

4. Die Haftklebstoffzusammensetzung nach irgendeinem der vorhergehenden Ansprüche, wobei: (c) das zumindest eine hydroxylfunktionelle (Meth)Acrylatmonomer in einer Menge von 0,1 bis 5 Gew.-%, vorzugsweise 0,1 bis 4,0 Gew.-%, bezogen auf das Gesamtgewicht der Monomermischung, vorhanden ist.

5. Die Haftklebstoffzusammensetzung nach Anspruch 2, wobei das Ureido-substituierte (Meth)Acrylatmonomer aus der Gruppe bestehend aus 2-(2-Oxoimidazolidin-1-yl)ethyl-2-methylprop-2-enoat, 2-(1-Methyl-2-oxoimidazolidin-1-ium-1-yl)ethyl-2-methylprop-2-enoat, Dimethyl-[2-(2-methylprop-2-enoyloxy)ethyl]-[2-(2-oxoimidazolidin-1-yl)ethyl]azanium, Dimethyl-[2-(2-methylprop-2-enoyloxy)ethyl]-[2-(2-oxoimidazolidin-1-yl)ethyl]azaniumchlorid, Dimethyl-[2-(2-methylprop-2-enoyloxy)ethyl]-[1-(2-oxoim idazolidin-1-yl)ethyl]azanium, Dimethyl-[2-(2-methylprop-2-enoyloxy)ethyl]-[1-(2-oxoimidazolidin-1-yl)ethyl]azaniumchlorid, 2-(4-Methyl-2-oxoimidazolidin-1-yl)ethyl-2-methylprop-2-enoat, 1-(2-Oxoimidazolidin-1-yl)ethyl-2-methylprop-2-enoat, 2-(2-Oxoimidazolidin-1-yl)ethyl-2-methylidenbutanoat, [1-Acetamido-2-(2-oxoimidazolidin-1-yl)ethyl] 2-methylprop-2-enoat, [2-Oxo-2-[2-(2-Oxoimidazolidin-1-yl)ethylamino]ethyl]2-methylprop-2-enoat, 2-(3-Methyl-2-oxoimidazolidin-1-yl)ethyl-2-methylprop-2-enoat, [2-oxo-2-[2-(2-oxoimidazolidin-1-yl)ethoxy]ethyl] 2-methylprop-2-enoate, [2-Oxo-2-[1-(2-Oxoimidazolidin-1-yl)ethylam ino]ethyl]2-methylprop-2-enoat, 2-Imidazolidinon, 1-(2-Aminoethyl)-, N,N-Bis[2-hydroxy-3-(2-propenyloxy)propyl] und N-[2-hydroxy-3-(2-propenyloxy)propyl] Derivate) und Kombinationen davon ausgewählt ist.

6. Die Haftklebstoffzusammensetzung nach Anspruch 2, wobei die Vinylester von C₂-C₂₀ Carbonsäuren aus Vinylacetat, Vinylbenzoat, Vinylbutyrat, Vinylformiat, Vinylpropionat, Vinylstearat, Vinyl-2-ethylhexanoat, Vinylester von C9 verzweigten Kohlenwasserstoffsäuren und Vinylester von C10 verzweigten Kohlenwasserstoffsäuren ausgewählt sind.

7. Die Haftklebstoffzusammensetzung nach irgendeinem der vorhergehenden Ansprüche, wobei (b) das zumindest eine vinylaromatische Monomer in einer Menge von 10,5 bis 19 Gew.-%, vorzugsweise 11 bis 18 Gew.-%, besonders bevorzugt 11 bis 17 Gew.-%, bezogen auf das Gesamtgewicht der Monomermischung, vorhanden ist.

8. Die Haftklebstoffzusammensetzung nach irgendeinem der vorhergehenden Ansprüche, wobei (e) die zumindest eine ethylenisch ungesättigte Carbonsäure in einer Menge von 0,05 bis 4 Gew.-%, bezogen auf das Gesamtgewicht der Monomermischung, vorhanden ist und eine monoethylenisch ungesättigte Monocarbonsäure oder ein Anhydrid davon ist oder wobei (e) keine ethylenisch ungesättigte Carbonsäure in der Monomermischung vorhanden ist.

9. Die Haftklebstoffzusammensetzung nach irgendeinem der vorhergehenden Ansprüche, wobei das zumindest eine Ureido-substituierte ethylenisch ungesättigte Monomer (d) in einer Menge von 0,05 bis 1 Gew.-%, bezogen auf das Gesamtgewicht der Monomermischung, vorhanden ist.

10. Die Haftklebstoffzusammensetzung nach irgendeinem der vorhergehenden Ansprüche, wobei mehr als 90 Gew.-%, vorzugsweise mehr als 95 Gew.-%, des zumindest einen Alkylesters von (Meth)Acrylsäure (a) Alkylester von (Meth)Acrylsäuremonomeren, deren Homopolymere eine Glasübergangstemperatur unter 50°C aufweisen, gemessen durch DSC gemäß D3418-03 mit einer Heizrate von 10°C/min, wobei der Mittelpunkt als Glasübergangstemperatur aufgezeichnet wird, umfasst.

11. Die Haftklebstoffzusammensetzung nach irgendeinem der vorhergehenden Ansprüche, des Weiteren umfassend Klebrigmacher oder Polyolefinemulsionen oder Kombinationen davon.

12. Die Haftklebstoffzusammensetzung nach irgendeinem der vorhergehenden Ansprüche, wobei die Zusammensetzung keine Komponenten mit Oxiranfunktionalität enthält.

13. Die Haftklebstoffzusammensetzung nach irgendeinem der vorhergehenden Ansprüche, wobei das Emulsionspolymerisationsprodukt ein einstufiges Emulsionspolymerisationsprodukt ist.

14. Die Haftklebstoffzusammensetzung nach irgendeinem der vorhergehenden Ansprüche, wobei bei der Herstellung des einstufigen Emulsionspolymerisationsprodukts die Monomere optional vorgemischt und voremulgiert werden und unter Verwendung eines Batch-, eines halbkontinuierlichen oder eines Pseudo-Batch-Verfahrens polymerisiert werden, optional in Gegenwart eines internen Saatlatex, der die gleiche Monomerzusammensetzung enthält, wie die bei der Polymerisation zugegebene Monomermischung.

15. Verwendung einer Haftklebstoffzusammensetzung, wie in irgendeinem der Ansprüche 1-14 definiert, zur freien Anwendung auf Gegenständen oder als ein Klebeband zur Verwendung in Kraftfahrzeugen, Wasserfahrzeugen, elektronischen Bauteilen, Öfen, Pyrolyseeinheiten, Abgasanlagen, Raumfahrtausrüstung oder geothermischen Geräten.

## Revendications

1. Composition d'adhésif sensible à la pression, comprenant le produit de polymérisation en émulsion d'un mélange de monomères, lequel mélange de monomères comprend :
a) plus de 38 % en poids d'au moins un ester alkylique d'acide (méth)acrylique,
b) de plus de 10 % en poids à moins de 20 % en poids d'au moins un monomère vinyl-aromatique,
c) de 0,1 à 8 % en poids d'au moins un monomère (méth)acrylate à groupe fonctionnel hydroxyle,
d) de 0,05 à 3 % en poids d'un monomère à insaturation éthylénique et porteur d'un substituant uréido,
e) de 0 à 6 % en poids d'au moins un acide carboxylique à insaturation éthylénique,
f) de 0 à 25 % en poids d'au moins un monomère à insaturation éthylénique différent des monomères (a) à (e),
étant entendu que les proportions des monomères (a) à (f) font au total 100 %, en poids rapporté au poids total du mélange de monomères.

2. Composition d'adhésif sensible à la pression, conforme à la revendication 1, dans laquelle
b) le monomère vinyl-aromatique est choisi parmi les styrène, alpha-méthyl-styrène, vinyl-toluène et leurs combinaisons,
c) et/ou le monomère (méth)acrylate à groupe fonctionnel hydroxyle est choisi parmi les (méth)acrylates d'hydroxy-alkyle en C₁-C₁₇, les esters préparés à partir d'acide (méth)acrylique et d'un ester de glycidyle d'un acide carboxylique en C₂-C₁₂, et leurs combinaisons,
d) et/ou le monomère à insaturation éthylénique et porteur d'un substituant uréido est choisi parmi les monomères (méth)acrylates à substituant uréido, les monomères allyliques à substituant uréido, et leurs combinaisons,
f) et/ou le monomère à insaturation éthylénique différent des monomères (a) à (e), au nombre d'au moins un, comprend des esters vinyliques d'acides carboxyliques en C₄-C₂₀, des tensioactifs à insaturation éthylénique, et des combinaisons de ceux-ci.

3. Composition d'adhésif sensible à la pression, conforme à la revendication 2, dans laquelle
c) le monomère (méth)acrylate à groupe fonctionnel hydroxyle est choisi dans l'ensemble formé par les acrylate d'hydroxyéthyle, méthacrylate d'hydroxyéthyle, acrylate d'hydroxypropyle, méthacrylate d'hydroxypropyle, acrylate d'hydroxybutyle, méthacrylate d'hydroxybutyle, acrylate d'hydroxyhexyle, méthacrylate d'hydroxyhexyle, acrylate d'hydroxyéthyl-hexyle, méthacrylate d'hydroxyéthyl-hexyle, et leurs combinaisons.

4. Composition d'adhésif sensible à la pression, conforme à l'une des revendications précédentes, dans laquelle c) le monomère (méth)acrylate à groupe fonctionnel hydroxyle au nombre d'au moins un est présent en une proportion de 0,1 à 5 % en poids, et de préférence, de 0,1 à 4,0 %, en poids rapporté au poids total du mélange de monomères.

5. Composition d'adhésif sensible à la pression, conforme à la revendication 2, dans laquelle le monomère (méth)acrylate porteur d'un substituant uréido est choisi dans l'ensemble formé par les suivants :
- 2-méthyl-prop-2-énoate de 2-(2-oxo-imidazolidin-1-yl)-éthyle,
- 2-méthyl-prop-2-énoate de 2-(1-méthyl-2-oxo-imidazolidin-1-ium-1-yl)-éthyle,
- diméthyl-[2-(2-méthyl-prop-2-énoyl-oxy)-éthyl]-[2-(2-oxo-imidazolidin-1-yl)-éthyl]-azanium,
- chlorure de diméthyl-[2-(2-méthyl-prop-2-énoyl-oxy)-éthyl]-[2-(2-oxo-imidazolidin-1-yl)-éthyl]-azanium,
- diméthyl-[2-(2-méthyl-prop-2-énoyl-oxy)-éthyl]-[1-(2-oxo-imidazolidin-1-yl)-éthyl]-azanium,
- chlorure de diméthyl-[2-(2-méthyl-prop-2-énoyl-oxy)-éthyl]-[1-(2-oxo-imidazolidin-1-yl)-éthyl]-azanium,
- 2-méthyl-prop-2-énoate de 2-(4-méthyl-2-oxo-imidazolidin-1-yl)-éthyle,
- 2-méthyl-prop-2-énoate de 1-(2-oxo-imidazolidin-1-yl)-éthyle,
- 2-méthylidène-butanoate de 2-(2-oxo-imidazolidin-1-yl)-éthyle,
- 2-méthyl-prop-2-énoate de 1-acétamido-2-(2-oxo-imidazolidin-1-yl)-éthyle,
- 2-méthyl-prop-2-énoate de 2-oxo-2-[2-(2-oxo-imidazolidin-1-yl)-éthyl-amino]-éthyle,
- 2-méthyl-prop-2-énoate de 2-(3-méthyl-2-oxo-imidazolidin-1-yl)-éthyle,
- 2-méthyl-prop-2-énoate de 2-oxo-2-[2-(2-oxo-imidazolidin-1-yl)-éthoxy]-éthyle,
- 2-méthyl-prop-2-énoate de 2-oxo-2-[1-(2-oxo-imidazolidin-1-yl)-éthyl-amino]-éthyle,
- dérivés N,N-bis[2-hydroxy-3-(prop-2-ényl-oxy)-propyl]- et N-[2-hydroxy-3-(prop-2-ényl-oxy)-propyl]- de la 1-(2-amino-éthyl)-imidazolidine-2-one,
et leurs combinaisons.

6. Composition d'adhésif sensible à la pression, conforme à la revendication 2, dans laquelle les esters vinyliques d'acides carboxyliques en C₂-C₂₀ sont choisis parmi les acétate de vinyle, benzoate de vinyle, butyrate de vinyle, formiate de vinyle, propionate de vinyle, stéarate de vinyle et 2-éthyl-hexanoate de vinyle, les esters de vinyle des acides dérivés d'un hydrocarbure ramifié en C₉, et les esters de vinyle des acides dérivés d'un hydrocarbure ramifié en C₁₀.

7. Composition d'adhésif sensible à la pression, conforme à l'une des revendications précédentes, dans laquelle
b) le monomère vinyl-aromatique au nombre d'au moins un se trouve en une proportion de 10,5 à 19 % en poids, de préférence de 11 à 18 % en poids, et mieux encore de 11 à 17 %, en poids rapporté au poids total du mélange de monomères.

8. Composition d'adhésif sensible à la pression, conforme à l'une des revendications précédentes, dans laquelle
e) l'acide carboxylique à insaturation éthylénique au nombre d'au moins un se trouve en une proportion de 0,05 à 4 %, en poids rapporté au poids total du mélange de monomères, et est un acide monocarboxylique à insaturation monoéthylénique ou un anhydride d'un tel acide,
ou dans laquelle il n'y a aucun acide carboxylique à insaturation éthylénique (e) dans le mélange de monomères.

9. Composition d'adhésif sensible à la pression, conforme à l'une des revendications précédentes, dans laquelle le monomère (d) à insaturation éthylénique et porteur d'un substituant uréido, au nombre d'au moins un, se trouve en une proportion de 0,05 à 1 %, en poids rapporté au poids total du mélange de monomères.

10. Composition d'adhésif sensible à la pression, conforme à l'une des revendications précédentes, dans laquelle plus de 90 % en poids, et de préférence plus de 95 % en poids, de l'ester alkylique d'acide (méth)acrylique (a), présent au nombre d'au moins un, est constitué de monomères esters alkyliques d'acide (méth)acrylique dont les homopolymères présentent une température de transition vitreuse inférieure à 50 °C, température mesurée par analyse thermique différentielle selon la norme D3418-03, à une vitesse de chauffage de 10 °C/min, le point médian étant pris comme température de transition vitreuse.

11. Composition d'adhésif sensible à la pression, conforme à l'une des revendications précédentes, comprenant en outre des agents poissants ou des émulsions de polyoléfine, ou des combinaisons de tels adjuvants.

12. Composition d'adhésif sensible à la pression, conforme à l'une des revendications précédentes, laquelle composition ne contient pas de composants comportant un groupe fonctionnel de type oxirane.

13. Composition d'adhésif sensible à la pression, conforme à l'une des revendications précédentes, dans laquelle le produit de polymérisation en émulsion est un produit de polymérisation en émulsion en une étape.

14. Composition d'adhésif sensible à la pression, conforme à l'une des revendications précédentes, pour laquelle, dans la préparation du produit de polymérisation en émulsion en une étape, les monomères sont, en option, pré-mélangés et pré-émulsifiés, et polymérisés suivant un régime de chargement discontinu, semi-continu ou pseudo-discontinu, en présence, en option, d'un latex germe interne constitué de la même composition de monomères que le mélange de monomères introduit pour la polymérisation.

15. Utilisation d'une composition d'adhésif sensible à la pression, conforme à l'une des revendications 1 à 14, à utiliser en application libre sur des articles, ou sous forme de bande adhésive à utiliser dans des véhicules automobiles, des navires, des composants électroniques, des fours, des unités de pyrolyse, des équipements pour gaz d'échappement, des équipements aérospatiaux ou des installations de géothermie.
